# FASCICULE DE BREVET EUROPEEN

(11) **EP 3 317 832 B1**
(45) Date de publication et mention de la délivrance du brevet: **05.10.2022**
(21) Numéro de dépôt: 16750896.9
(22) Date de dépôt: 28.06.2016
(51) Int. Cl.: G06Q 20/34, G06Q 20/38, G06Q 20/40, G07F 7/08, G05B 19/042

(54) **PROCEDE DE CONTROLE MIS EN OEUVRE PAR UN DISPOSITIF ELECTRONIQUE AU COURS D'UNE TRANSACTION, ET DISPOSITIF CORRESPONDANT**
DURCH EINE ELEKTRONISCHE VORRICHTUNG WÄHREND EINER TRANSAKTION IMPLEMENTIERTES ÜBERWACHUNGSVERFAHREN UND ENTSPRECHENDE VORRICHTUNG
MONITORING METHOD IMPLEMENTED BY AN ELECTRONIC DEVICE DURING A TRANSACTION, AND CORRESPONDING DEVICE

(30) Priorité: 30.06.2015 FR 1556131
(43) Date de publication de la demande: 09.05.2018
(73) Titulaire: IDEMIA France, 92400 Courbevoie (FR)
(72) Inventeur: CHAMBEROT, Francis, 92700 Colombes (FR); REZZELI, Arezki, 92700 Colombes (FR)
(74) Mandataire: Idemia
(86) Numéro de dépôt international: PCT/FR2016/051588
(87) Numéro de publication internationale: WO 2017/001758

(56) Documents cités:
- EP-A1- 1 646 018
- FR-A1- 2 784 483
- JP-A- S56 168 219
- KR-A- 20070 082 003
- US-A1- 2011 271 042

## Description

L'invention se rapporte au domaine général des dispositifs électroniques aptes à effectuer des opérations telles que des transactions, par exemple en coopérant avec un terminal.

L'invention trouve application de manière non exclusive dans les cartes à puce (ou cartes à microcircuit), conformes par exemple à la norme ISO 7816. L'invention concerne tout particulièrement les cartes à puce selon le standard EMV (« Europay Mastercard Visa ») qui mettent en œuvre des transactions.

Le standard EMV, bien connu de l'homme du métier, est utilisé pour sécuriser des transactions réalisées par des cartes à puce, en particulier des transactions bancaires de paiement. D'autres transactions peuvent également être mises en œuvre par ces cartes à puce, par exemple des transactions de transfert, de consultation, ou encore d'authentification.

Ce standard permet de sécuriser les transactions et de limiter les fraudes. A cet effet, il implique l'utilisation de cryptogrammes ou encore de codes secrets (généralement désignés par l'acronyme anglo-saxon :« PIN : Personal identification number »).

Cela étant, les cartes à puces utilisant le protocole EMV sont régulièrement sujettes à des attaques ayant des fins frauduleuses. Certaines de ces attaques peuvent ne pas être détectées par les capteurs de détection d'attaque embarqués au sein des cartes à puce.

L'invention vise notamment à pallier cet inconvénient, et plus précisément à permettre la détection d'événements pouvant être frauduleux et qui ne sont pas détectés par les cartes à puce selon la technique antérieure.

De l'état de la technique antérieure, on connait le document FR 2784483 qui décrit un procédé d'échange de données entre un automate et une carte à microcircuit, qui utilise un indicateur de ratification.

### Objet et résumé de l'invention

La présente invention répond à ce besoin en proposant un procédé de contrôle mis en œuvre par un dispositif électronique en accord avec la revendication 1.

Dans la présente demande, un changement d'état inverse d'une composante permet de retrouver la valeur de la composante avant un changement d'état. A titre d'exemple non couvert par la portée des revendications, un « flag » qui passe de 0 à 1 lors d'un changement d'état passera de 1 à 0 lors d'un changement d'état inverse. Selon l'invention, un changement d'état est une incrémentation et un changement d'état inverse une décrémentation.

L'invention propose donc d'implémenter un indicateur dans un dispositif électronique, cet indicateur a une composante qui change d'état au début ou au cours d'une transaction, puis qui change d'état de manière inverse vers la fin de la transaction en choisissant l'étape critique vers la fin de la transaction. En effet, l'étape critique peut être choisie comme étant la dernière étape considérée comme pouvant être non complétée dans le cadre d'une transaction frauduleuse interrompue. La réalisation de du changement d'état inverse final permet de vérifier que la transaction a été effectuée dans son ensemble. L'indicateur indique donc si la transaction a été complétée ou non.

On peut aussi noter que le changement d'état inverse final est mis en œuvre au cours de la transaction, puisque ce procédé est mis en œuvre au cours de la transaction.

Si la transaction n'est pas complétée, l'indicateur conserve l'état dans lequel le changement d'état initial l'a laissé. Des transactions non complétées font ainsi changer plusieurs fois l'ensemble de l'indicateur.

Les inventeurs ont observé que certaines attaques impliquent l'interruption de la transaction avant qu'elle ne soit complétée. De ce fait, en utilisant un indicateur qui indique qu'une ou des transactions ont été non complétées, on obtient une indication sur la possibilité que des attaques répétées soient mises en œuvre contre la carte.

L'utilisation de l'indicateur permet par ailleurs de détecter des défaillances de la carte, ou encore des défaillances liées à un lecteur utilisant la carte.

Selon un exemple non couvert par la portée des revendications, on pourra mettre en œuvre le changement d'état initial à tout instant de la transaction, et préférentiellement au moins avant la mise en œuvre d'étapes de la transaction qui peuvent être l'objet d'attaques.

L'indicateur comportant des composantes a une structure analogue à celle d'un vecteur.

On peut noter que si le changement d'état final comporte un changement d'état inverse d'une seule composante, alors il est implicite que toutes les autres composantes ont déjà subi un changement d'état inverse puisqu'après ce changement d'état inverse finale, l'indicateur retrouve son état initial.

Ainsi, chaque étape de la transaction est associée à une composante du compteur. De ce fait, la lecture de l'indicateur peut fournir une indication concernant l'instant de la transaction où la transaction a été arrêtée. A titre d'exemple, à partir de l'indicateur, un homme de l'art saura déterminer quelles sont les attaques qui visent le dispositif.

Le procédé selon l'invention est ainsi implémenté en limitant le nombre d'écritures dans la mémoire du dispositif, puisque certaines étapes d'écriture déjà présentes dans la transaction sont utilisées pour en outre modifier les valeurs des composantes de l'indicateur.

De telles écritures peuvent être des écritures sécurisées connues par l'homme du métier sous l'expression « opérations atomiques » ou « écritures atomiques ». La décrémentation d'une composante du compteur bénéficie ainsi de la sécurisation d'une écriture atomique.

Les opérations atomiques sont décrites dans le document « Smart Card Handbook » de Wolfgang Rankl et Wolfgang Effing.

L'étape d'initialisation de traitement d'application (ou « Initiate application processing » en langue anglaise) est la première étape d'une transaction EMV qui comporte une écriture sécurisée dans une mémoire (opération atomique) : l'écriture de la nouvelle valeur de compteur d'application de transaction (« ATC :Application Transaction Counter » en langue anglaise). De ce fait, il est particulièrement avantageux d'incrémenter les composantes dudit compteur au cours de cette écriture.

L'étape de génération d'un cryptogramme est mise en œuvre à la fin d'une transaction EMV. De ce fait, il est particulièrement avantageux de faire le changement d'état inverse final des composantes qui ne l'ont pas encore subi au cours de cette étape.

Dans un mode particulier de mise en œuvre, au moins un changement d'état et/ou au moins un changement d'état inverse est mis en œuvre sous le contrôle d'un module de commande de l'exécution de la transaction.

Un tel module de commande de l'exécution de la transaction est généralement désigné sous le vocable anglo-saxon « dispatcher ».

Dans un mode particulier de mise en œuvre, le procédé comporte une étape ultérieure de déduction d'un compteur de transaction non complétées à partir dudit indicateur.

A titre indicatif et selon un exemple non couvert par la portée des revendications, pour un indicateur comportant une pluralité de « flags », c'est-à-dire pour lequel chaque composante peut prendre la valeur « 0 » ou « 1 », on sait que si après la mise en œuvre de la transaction l'un des flags est à 1, alors on peut incrémenter un compteur de transactions non complétées puisque ce flag à 1 indique qu'une transaction n'a pas été complétée. On peut noter que l'utilisation de flags implique une mise à 0 avant le commencement de la transaction de tous les flags.

Cette comparaison peut par exemple être une comparaison d'une composante du compteur à un seuil, par exemple la dernière composante (c'est-à-dire la dernière devant être décrémentée). La dernière composante indique le nombre total de transactions qui n'ont pas été complétées.

Dans un mode particulier de mise en œuvre, le traitement de sécurité comporte un envoi dudit compteur à un terminal externe.

L'envoi du compteur (dans son état lors de la comparaison) à un terminal externe peut ensuite permettre de faire remonter le compteur à une entité émettrice du dispositif, par exemple la banque qui a émis le dispositif s'il s'agit d'une carte à puce.

On peut noter que l'envoi du compteur, ou la mise en œuvre du traitement de sécurité, peut être mise en œuvre postérieurement à la transaction.

En considérant le compteur comme une information de sécurité, l'envoi de cette information de sécurité peut comporter les étapes suivantes :
- démarrage, suite audit enregistrement, d'une transaction avec un terminal externe; et
- envoi au terminal externe de l'information de sécurité dans un message de transaction lors de ladite transaction.

Selon un mode particulier de mise en œuvre, on envoie au terminal externe, dans un message AFL (Application File Locator), une donnée de référencement permettant au terminal externe de lire l'information de sécurité dans une mémoire sécurisée du microcircuit; et
l'information de sécurité est envoyée au terminal externe en réponse à une commande de lecture reçue du terminal externe suite à l'envoi du message AFL.

Selon un mode particulier de mise en œuvre, le procédé comprend l'envoi au terminal externe, dans un message ATR, d'une donnée de référencement lui permettant de lire l'information de sécurité dans la mémoire sécurisée du microcircuit.

Selon un mode particulier de mise en œuvre, l'information de sécurité est envoyée au terminal externe en tant que donnée non interprétable par le terminal externe en réponse à un message GENERATE AC reçu du terminal externe.

Selon un mode particulier de mise en œuvre, ledit changement d'état initial est mis en œuvre après la réception par le dispositif électronique d'un premier message de transaction et avant l'émission par le dispositif électronique d'une réponse à ce premier message de transaction.

Le premier message de transaction peut être le premier message APDU (« Application Protocol Data Unit ») reçu par le dispositif électronique au cours d'une transaction.

Selon un mode particulier de mise en œuvre, ledit changement d'état final est mis en œuvre avant la réception d'un deuxième message de transaction et après l'émission de ladite réponse au premier message.

Le deuxième message de transaction peut être le deuxième message APDU reçu par le dispositif électronique au cours d'une transaction.

L'invention propose également un programme d'ordinateur comportant des instructions pour l'exécution des étapes d'un procédé de contrôle tel que défini ci-avant lorsque ledit programme est exécuté par un processeur.

L'invention propose également un support d'enregistrement lisible par un processeur sur lequel est enregistré un programme d'ordinateur comprenant des instructions pour l'exécution des étapes d'un procédé de contrôle tel que défini ci-avant.

On peut noter que les programme d'ordinateur mentionnés dans le présent exposé peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

De plus, les supports d'enregistrement (ou d'information) mentionnés dans le présent exposé peuvent être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur.

D'autre part, les supports d'enregistrement peuvent correspondre à un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, les supports d'enregistrement peuvent correspondre à un circuit intégré dans lequel le programme est incorporé, le circuit étant adapté pour exécuter ou pour être utilisé dans l'exécution du procédé en question.

L'invention propose également un dispositif électronique en accord avec la revendication 9.

Ce dispositif peut être apte à mettre en œuvre tous les modes de mise en œuvre du procédé tel que défini ci-avant.

Enfin, l'invention propose également une carte à puce comprenant le dispositif tel que défini ci-avant.

### Brève description des dessins

D'autres caractéristiques et avantages de la présente invention ressortiront de la description faite ci-dessous, en référence aux dessins annexés qui en illustrent un exemple dépourvu de tout caractère limitatif.

Sur les figures :
- la figure 1 représente de façon schématique différentes étapes d'un procédé selon un exemple non couvert par la portée des revendications,
- la figure 2 représente une carte à puce selon un mode de réalisation de l'invention apte à réaliser le procédé des figures 3 et 4,
- la figure 3 représente différentes étapes d'un procédé selon l'invention dans lequel une transaction est complétée,
- la figure 4 représente différentes étapes d'un procédé selon l'invention dans lequel une transaction n'est pas complétée.

### Description détaillée d'un mode de réalisation

On va maintenant décrire des exemples de réalisation de l'invention dans lesquels un procédé de contrôle est mis en œuvre par une carte à puce (conforme à la norme ISO 7816) utilisant le standard EMV pour mettre en œuvre des transactions.

Il convient de noter que l'invention s'applique à tout dispositif apte à mettre en œuvre une transaction qui utilise le standard EMV.

On peut également noter que la notion de transaction est ici entendue au sens large et comprend par exemple, dans le domaine bancaire, aussi bien une transaction de paiement ou de transfert que d'une consultation d'un compte bancaire sur un terminal bancaire. L'invention est décrite ici dans le cadre d'une carte de paiement destinée à réaliser des transactions bancaires. On comprendra que d'autres types de transactions ou opérations sont envisageables dans le cadre de l'invention.

Dans le mode de réalisation qui suit, l'indicateur est un compteur.

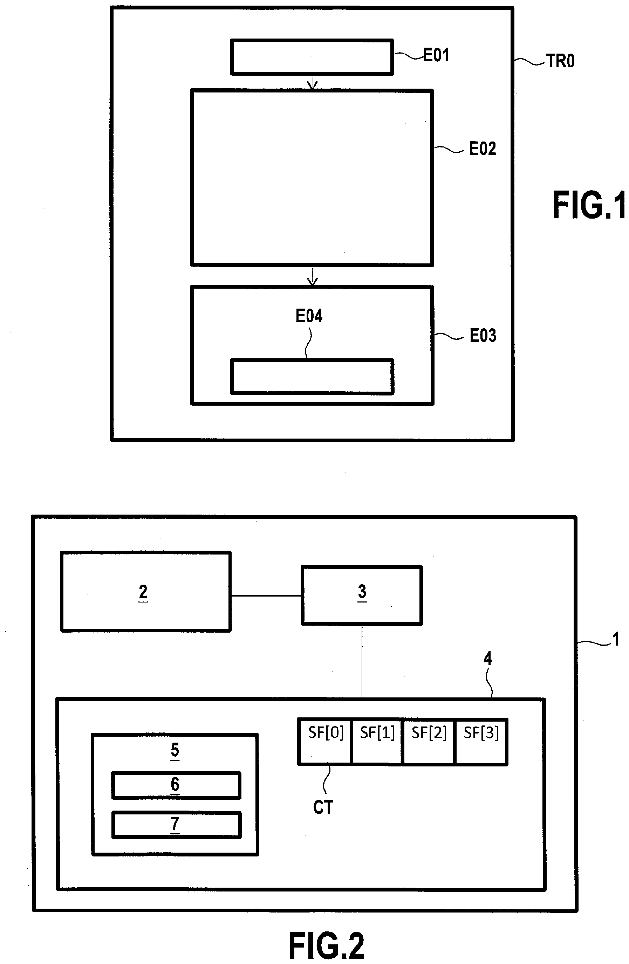

Sur la figure 1, on a représenté de manière schématique un procédé de contrôle mis en œuvre par un dispositif tel qu'une carte à puce.

Les étapes de ce procédé s'effectuent au cours d'une transaction TRO, qui est une transaction bancaire de paiement dans cet exemple.

Pour améliorer la sécurité de la carte à puce, l'exemple se propose de suivre les transactions qui n'ont pas été complétées, les inventeurs ayant observé que des attaques sont mises en œuvre sans que la transaction ne soit complétée.

A cet effet, dans une première étape E01, on effectue une incrémentation initiale d'une composante d'un compteur ayant été mémorisé dans une mémoire du dispositif et qui comporte plusieurs composantes. Antérieurement à l'étape E01, le compteur était dans un état initial : chaque composante présentait une valeur déjà mémorisée dans la mémoire du dispositif avant que la transaction TR0 ne soit mise en œuvre.

Dans l'exemple de la figure 1, l'étape E01 d'incrémentation initiale est représentée comme étant mise en œuvre au début de la transaction TR0. On peut noter qu'il est également possible de mettre en œuvre l'incrémentation initiale postérieurement à une première étape d'une transaction : la position de l'étape d'incrémentation initiale dépendant d'un niveau de sécurité et l'homme du métier saura choisir cette position pour obtenir un niveau de sécurité voulu.

Dans une deuxième étape E02, on met en œuvre des étapes d'une transaction.

La transaction comporte une étape critique E03 qui est ici la dernière étape de la transaction, qui est représentée dans cet exemple comme étant la dernière étape de la transaction TR0. Cette étape critique comprend une sous-étape E04 de décrémentation mise en œuvre à la fin de l'étape critique de la transaction E03. Dans la sous-étape E04 de décrémentation, on décrémente la composante du compteur ayant été incrémentée au cours de l'étape d'incrémentation initiale E01, et ce de sorte que le compteur retrouve son état initial d'avant la mise en œuvre de l'étape d'incrémentation initiale E01.

De ce fait, si la transaction a été interrompue avant la mise en œuvre de l'étape critique de la transaction, le compteur conserve sa valeur obtenue après l'incrémentation initiale de l'étape E01.

Sur la figure 2, on a représenté une carte à puce 1 selon la norme ISO 7816 apte à mettre en œuvre des transactions en accord avec le standard EMV.

La carte à puce 1 comporte un module de contacts 2 selon la norme ISO 7816 permettant à la carte de communiquer (réception et transmission), et le module de contacts est connecté à un processeur 3.

Le processeur 3 est capable d'exécuter des instructions stockées dans une mémoire 4 de la carte à puce. La mémoire 4 est une mémoire non volatile réinscriptible (de type Flash par exemple).

Un programme d'ordinateur 5 est contenu dans la mémoire 4, et ce programme comporte des instructions pour la mise en œuvre d'un procédé de contrôle tel que celui décrit en référence à la figure 1.

Le programme 5 comporte en particulier les instructions suivantes, configurées pour être exécutées lors d'une transaction :
- Une instruction 6 pour effectuer une incrémentation initiale d'une composante d'un compteur CT également stocké dans la mémoire 4 avant la mise en œuvre d'une étape critique de la transaction, et
- Une instruction 7 pour effectuer une décrémentation finale de ladite composante après le début de la mise en œuvre de l'étape critique de la transaction.

Le compteur CT est stocké dans la mémoire non volatile réinscriptible 4, de ce fait, ce compteur conserve son état après la mise en œuvre d'une transaction complète ou incomplète. Le compteur CT comporte quatre composantes référencées SF[0], SF[1], SF[2], et SF[3].

Dans un exemple particulier, la carte à puce 1 comporte :
- Un module d'incrémentation (non représenté) apte à incrémenter au moins une composante au cours d'une transaction mise en œuvre par le dispositif et avant la mise en œuvre d'une étape critique de la transaction.
- Un module de décrémentation (non représenté) apte à décrémenter ladite au moins une composante au cours d'une transaction mise en œuvre par le dispositif et après le début de la mise en œuvre de l'étape critique de la transaction, de sorte que le compteur retrouve un état initial mémorisée dans la mémoire avant ladite transaction.

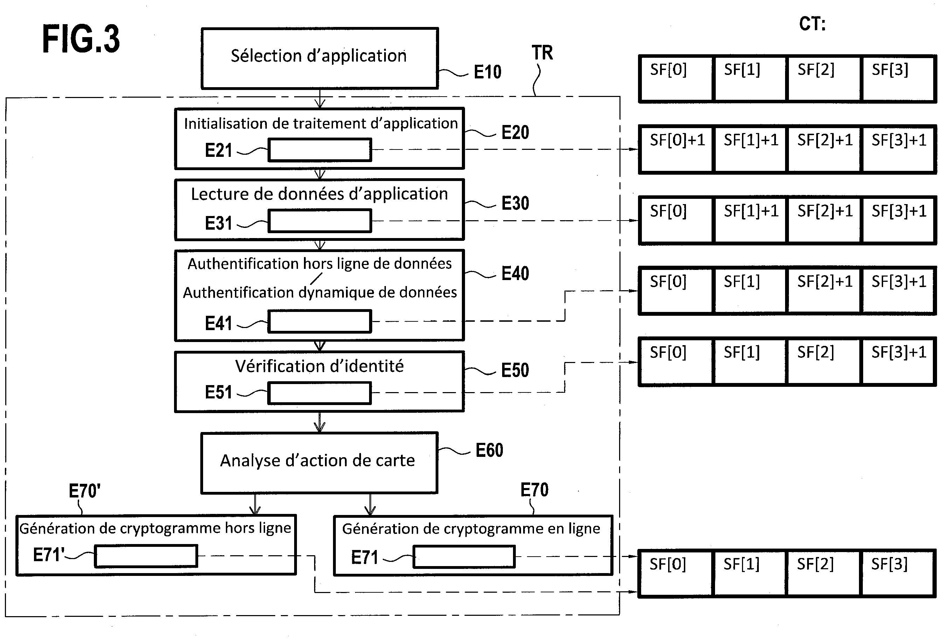

Sur la figure 3, on a représenté à la fois différentes étapes d'un procédé et l'état correspondant du compteur CT. Dans cet exemple, la transaction TR est une transaction EMV mise en œuvre par une carte à puce analogue à celle de la figure 2. Aussi, dans cet exemple, les incrémentations et les décrémentations du compteur sont toutes mises en œuvre simultanément à des étapes d'écritures propres aux étapes de la transaction, et ces écritures sont des écritures atomiques.

Comme on le conçoit, la transaction EMV peut comprendre des étapes supplémentaires, qui n'ont pas toutes été détaillées ici pour des raisons de simplicité.

L'étape initiale E10 de sélection d'application ne fait pas à proprement parler parti de la transaction TR. Cette étape comporte un envoi par un lecteur d'une commande dite APDU (« Application Protocol Data Unit ») vers la carte à puce visant la sélection d'application.

A cette étape, le compteur CT est dans son état initial, les cinq composantes sont respectivement SF[0], SF[1], SF[2], et SF[3].

La transaction TR commence ici dans une étape E20 d'initialisation de traitement d'application (« Initiate application processing » en langue anglaise) et qui est amorcée par une commande APDU « Get Processing Options » envoyée par un lecteur. Au cours de l'étape E20 d'initialisation de traitement d'application, une valeur de compteur d'application de transaction (« ATC : Application Transaction Counter ») est inscrite dans la mémoire 4 de la carte à puce.

L'écriture de la valeur de compteur d'application de transaction est sécurisée, et l'incrémentation initiale E21 est mise en œuvre simultanément à cette écriture sécurisée pour incrémenter toutes les composantes du compteur CT (en additionnant 1 à chaque SF[i]). Cette écriture simultanée est une écriture atomique bien connue de l'homme du métier, dans laquelle les données à écrire (le compteur ATC et le compteur CT) sont écrites dans une mémoire tampon avec un bit précisant que ces données sont prêtes à être écrites.

Une étape suivante de la transaction est l'étape de lecture de données d'application E30 (« Read application data » en langue anglaise), qui comporte une étape d'écriture de données relatives à la transaction (utilisation d'un mode avec contact ou sans-contact) dans la mémoire 4. Au cours de l'écriture de données relatives à la transaction, on décrémente la composante SF[0] (étape E31) qui retrouve sa valeur initiale.

On met ensuite en œuvre une authentification hors ligne de données ou une authentification dynamique de données (E40) dans laquelle on effectue une écriture dans la mémoire 4 d'un compteur lié à un cryptogramme ou à une clé. Au cours de cette écriture, on décrémente la composante SF[1] (étape E41) qui retrouve sa valeur initiale.

L'étape de vérification d'identité E50 est ensuite mise en œuvre. Dans cette étape, un code personnel est entré par l'utilisateur (code PIN), et cela est accompagné par des écritures dans la mémoire 4 de compteurs de code saisi erroné (par exemple pour empêcher la saisie consécutive de trois codes erronés). Au cours de l'une de ces écritures, on effectue simultanément une décrémentation de la composante SF[2] (étape E51) qui retrouve sa valeur initiale.

La transaction peut comporter une étape d'analyse d'action de carte E60, dans laquelle il est décidé si la transaction se poursuit en ligne ou hors ligne. Cette étape ne comporte pas d'écriture dans la mémoire de la carte à puce et elle n'est donc pas utilisée par le procédé selon l'invention pour mettre en œuvre des décrémentations.

Une étape de génération de cryptogramme (« generate cryptogram ») est ensuite mise en œuvre de manière en ligne (étape E70) ou hors ligne (étape E70'). Différentes données peuvent être écrites dans la mémoire 4 au cours de ces étapes E70 et E70', en particulier des registres de transaction, et des cryptogrammes. Au cours de l'une des étapes d'écriture propre à une étape de génération de cryptogramme, on effectue une décrémentation finale (E71 et E71') dans laquelle on décrémente la dernière composante SF[3] de sorte que le compteur dans son ensemble retrouve son état initial.

Dans l'exemple illustré ci-dessus en référence à la figure 3, la transaction est complétée normalement.

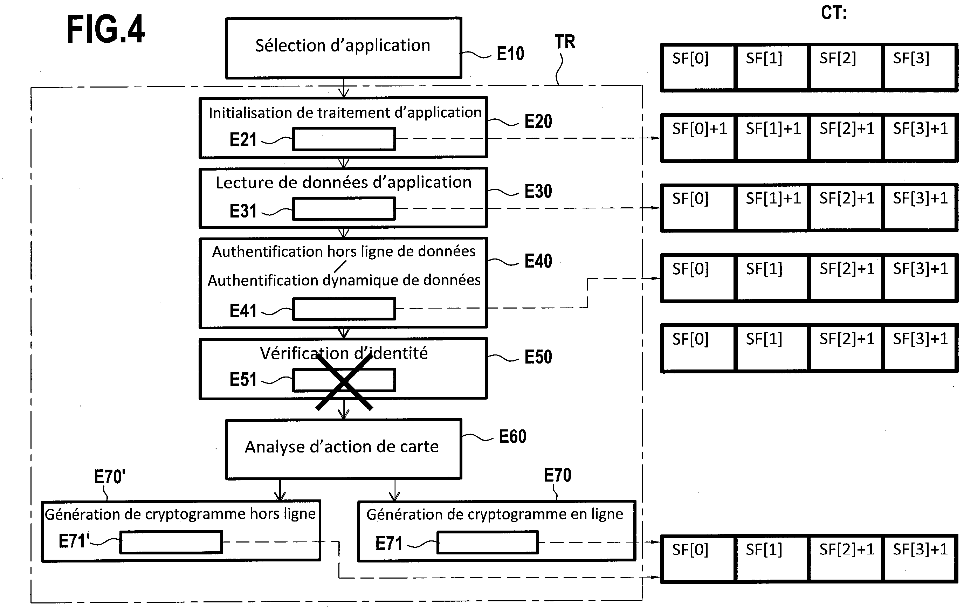

La figure 4 présente l'évolution de la valeur du compteur CT au cours d'une transaction interrompue au cours de l'étape de vérification d'identité E50.

Comme on peut le constater sur la figure, la composante SF[2] n'a pas été décrémentée, et tel est également le cas pour la composante SF[3], puisqu'aucune étape de génération de cryptogramme E70 et E70'.

A la fin de la transaction, les composantes SF[2] et SF[3] ont toutes les deux une valeur incrémentée de 1 par rapport au début de la transaction. Le nouvel état du compteur est conservé et lors de la prochaine transaction non-complétée, ces composantes peuvent encore être incrémentées.

Il apparait que la lecture de la composante SF[3], c'est-à-dire la dernière composante, indique le nombre total de transactions non complétées.

Le nombre de transactions non-complétées à une étape précise de la transaction peut être calculé en calculant la différence entre la composante associée à cette étape et la composante précédente (i.e. SF[i]-SF[i-1]).

Si le compteur dépasse un seuil, par exemple si la dernière composante dépasse 100 ou 1000, alors on peut mettre en œuvre un traitement de sécurité comportant un envoi dudit compteur à un terminal externe tel qu'un lecteur de carte. Cet envoi peut être réalisé au cours d'une transaction ultérieure, et la comparaison peut être effectuée par un processeur 3 d'une carte à puce.

En envoyant le compteur à un terminal, on peut transmettre le compteur à l'entité émettrice de la carte à puce, par exemple une banque. La lecture du compteur comportant plusieurs composantes peut indiquer un type d'attaque mis en œuvre à contre la carte, ou encore quel type de défaillance présente la carte à puce.

Le traitement de sécurité peut par ailleurs comporter une mise en œuvre d'action de protection au sein de la carte tel qu'un blocage de la carte. Un tel blocage peut intervenir si un seuil supplémentaire est dépassé.

## Revendications

1. Procédé de contrôle mis en œuvre par un dispositif électronique, ledit procédé comportant, au cours d'une transaction EMV mise en œuvre par le dispositif comprenant une mémoire dans laquelle est mémorisé un indicateur comportant une pluralité de composantes, les étapes suivantes :
- un changement d'état initial (E01) de chaque composante de l'indicateur, le changement d'état initial étant réalisé avant la mise en œuvre d'une étape critique de la transaction, et l'indicateur ayant un état initial avant ledit changement d'état initial,
- pendant ou après chacune des étapes d'une pluralité d'étapes de la transaction postérieures audit changement d'état initial, un changement d'état inverse de l'une des composantes de l'indicateur,
- un changement d'état inverse final (E04) dudit indicateur après le début de la mise en œuvre de l'étape critique de la transaction (E03), de sorte que l'indicateur retrouve ledit état initial, ledit changement d'état inverse final comportant un changement d'état inverse d'au moins l'une desdites composantes de l'indicateur pour retrouver l'état de la composante avant le changement d'état initial de cette composante, le procédé comprenant un changement d'état inverse pendant une étape de la transaction et au cours d'une étape d'écriture dans une mémoire du dispositif propre à l'étape de la transaction, le changement d'état initial (E21) étant mis en œuvre pendant une étape d'initialisation de traitement d'application (E20), le changement d'état initial étant mis en œuvre au cours d'une étape d'écriture d'une valeur de compteur d'application de transaction (ATC) dans ladite mémoire, et le changement d'état final (E71, E71') étant mis en œuvre pendant ladite étape critique, l'étape critique étant une étape de génération de cryptogramme (E70, E70'), le changement d'état final étant mis en œuvre au cours d'une étape d'écriture dans ladite mémoire propre à l'étape de génération de cryptogramme, l'indicateur étant un compteur de transactions non complétées, ledit changement d'état initial étant une incrémentation initiale, ledit changement d'état inverse final étant une décrémentation finale, le procédé comportant en outre une comparaison dudit compteur à un seuil et, si ledit compteur est supérieur audit seuil, la mise en œuvre d'un traitement de sécurité.

2. Procédé selon la revendication 1, dans lequel au moins un changement d'état et/ou au moins un changement d'état inverse est mis en œuvre sous le contrôle d'un module de commande de l'exécution de la transaction.

3. Procédé selon l'une quelconque des revendications 1 ou 2, comportant une étape ultérieure de déduction d'un compteur de transaction non complétées à partir dudit indicateur.

4. Procédé selon la revendication 1, dans lequel le traitement de sécurité comporte un envoi dudit compteur à un terminal externe.

5. Procédé selon l'une des revendications 1 à 4, dans lequel ledit changement d'état initial est mis en œuvre après la réception par le dispositif électronique d'un premier message de transaction et avant l'émission par le dispositif électronique d'une réponse à ce premier message de transaction.

6. Procédé selon la revendication 5, dans lequel ledit changement d'état final est mis en œuvre avant la réception d'un deuxième message de transaction et après l'émission de ladite réponse au premier message.

7. Programme d'ordinateur comportant des instructions pour l'exécution des étapes d'un procédé de contrôle selon l'une des revendications 1 à 6 lorsque ledit programme est exécuté par un processeur.

8. Support d'enregistrement lisible par un processeur sur lequel est enregistré un programme d'ordinateur comprenant des instructions pour l'exécution des étapes d'un procédé de contrôle selon l'une quelconque des revendications 1 à 6

9. Dispositif électronique apte à mettre en œuvre un procédé selon l'une quelconque des revendications 1 à 6.

10. Carte à puce comprenant le dispositif selon la revendication 9.

## Patentansprüche

1. Überwachungsverfahren, das von einer elektronischen Vorrichtung ausgeführt wird, wobei das Verfahren im Verlauf einer EMV-Transaktion, die von der Vorrichtung ausgeführt wird, die einen Speicher umfasst, in dem ein Indikator mit einer Vielzahl von Komponenten gespeichert ist, die folgenden Schritte umfasst:
- eine initiale Statusänderung (E01) einer jeden Komponente des Indikators, wobei die initiale Statusänderung vor der Ausführung eines kritischen Transaktionsschritts erfolgt und der Indikator vor der initialen Statusänderung einen initialen Status aufweist,
- während oder nach jedem der Schritte einer Vielzahl von Transaktionschritten, die auf die initiale Statusänderung folgen, eine inverse Statusänderung einer der Komponenten des Indikators,
- eine abschließende inverse Statusänderung (E04) des Indikators nach dem Beginn der Ausführung des kritischen Transaktionsschritts (E03), so dass bei dem Indikator der initiale Status wiederhergestellt wird,
wobei die abschließende inverse Statusänderung eine inverse Statusänderung mindestens einer der Komponenten des Indikators umfasst, um den Status der Komponente vor der initialen Statusänderung dieser Komponente wiederherzustellen, wobei das Verfahren umfasst:
eine inverse Statusänderung während eines Transaktionsschritts und im Verlauf eines Schritts des Schreibens in einen Speicher der Vorrichtung, der zu dem Transaktionsschritt gehört, wobei die initiale Statusänderung (E21) während eines Initialisierungsschritts der Anwendungsverarbeitung (E20) erfolgt, wobei die initiale Statusänderung im Verlauf eines Schritts des Schreibens eines Werts des Anwendungstransaktionszählers (ATC) in den Speicher erfolgt, und
wobei die abschließende Statusänderung (E71, E71') während des kritischen Schritts erfolgt, wobei der kritische Schritt ein Kryptogrammerzeugungsschritt (E70, E70') ist, wobei die abschließende Statusänderung im Verlauf eines Schritts des Schreibens in den Speicher erfolgt, der zu dem Kryptogrammerzeugungsschritt gehört, wobei der Indikator ein Zähler für nicht abgeschlossene Transaktionen ist, wobei es sich bei der initialen Statusänderung um eine initiale Inkrementierung handelt, wobei es sich bei der abschließenden inversen Statusänderung um eine abschließende Dekrementierung handelt, wobei das Verfahren ferner einen Vergleich des Zählers mit einem Schwellenwert und, wenn der Zähler größer als der Schwellenwert ist, die Ausführung einer Sicherheitsverarbeitung umfasst.

2. Verfahren nach Anspruch 1, wobei mindestens eine Statusänderung und/oder mindestens eine inverse Statusänderung unter der Überwachung durch ein Modul zur Steuerung der Transaktionsausführung erfolgt.

3. Verfahren nach einem der Ansprüche 1 oder 2, umfassend einen nachfolgenden Schritt des Ableitens eines Zählers für nicht abgeschlossene Transaktionen aus dem Indikator.

4. Verfahren nach Anspruch 1, wobei die Sicherheitsverarbeitung ein Senden des Zählers an ein externes Endgerät umfasst.

5. Verfahren nach einem der Ansprüche 1 bis 4, wobei die initiale Statusänderung nach dem Empfang einer ersten Transaktionsnachricht durch die elektronische Vorrichtung und vor dem Senden einer Antwort auf diese erste Transaktionsnachricht durch die elektronische Vorrichtung erfolgt.

6. Verfahren nach Anspruch 5, wobei die abschließende Statusänderung vor dem Empfang einer zweiten Transaktionsnachricht und nach dem Senden der Antwort auf die erste Nachricht erfolgt.

7. Computerprogramm, umfassend Anweisungen zur Ausführung der Schritte eines Überwachungsverfahrens nach einem der Ansprüche 1 bis 6 während der Ausführung des Programms durch einen Prozessor.

8. Prozessorlesbares Speichermedium, auf dem ein Computerprogramm gespeichert ist, das Anweisungen zur Ausführung der Schritte eines Überwachungsverfahrens nach einem der Ansprüche 1 bis 6 umfasst.

9. Elektronische Vorrichtung, die zur Ausführung eines Verfahrens nach einem der Ansprüche 1 bis 6 geeignet ist.

10. Chipkarte, welche die Vorrichtung nach Anspruch 9 umfasst.

## Claims

1. A method of control implemented by an electronic device, said method comprising, during an EMV transaction implemented by the device comprising a memory wherein is stored an indicator comprising a plurality of components, the following steps:
- an initial state change (E01) of each component of the indicator, the initial state change being performed prior to the implementation of a critical step of the transaction, and the indicator having an initial state prior to said initial state change,
- during or after each of the steps of a plurality of steps of the transaction subsequent to said initial state change, a reverse state change of one of the indicator components,
- a final reverse state change (E04) of said indicator after the start of the implementation of the critical step of the transaction (E03), so that the indicator returns to said initial state,
said final reverse state change comprising a reverse state change of at least one of said components of the indicator to recover the state of the component prior to the initial state change of that component, the method comprising
a reverse state change during a step of the transaction and during a step of writing to a memory of the device specific to the step of the transaction, the initial state change (E21) being implemented during an application processing initialization step (E20), the initial state change being implemented during a step of writing an application transaction counter (ATC) value to said memory, and
the final state change (E71, E71') being implemented during said critical step, the critical step being a cryptogram-generating step (E70,E70'), the final state change being implemented during a step of writing to said memory specific to the cryptogram-generating step, the indicator being a counter of uncompleted transactions, said initial state change being an initial increment, said final reverse state change being a final decrement, the method further comprising a comparison of said counter with a threshold and, if said counter is greater than said threshold, the implementation of a security treatment.

2. The method according to claim 1, wherein at least one state change and/or at least one reverse state change is implemented under the control of a transaction execution control module.

3. The method according to either one of claims 1 or 2, comprising a subsequent step of deducing a counter of uncompleted transaction from said indicator.

4. The method according to claim 1, wherein the security processing comprises sending said counter to an external terminal.

5. The method according to one of claims 1 to 4, wherein said initial state change is implemented after the electronic device receives a first transaction message and before the electronic device sends a response to that first transaction message.

6. The method according to claim 5, wherein said final state change is implemented prior to receipt of a second transaction message and after transmission of said response to the first message.

7. A computer program comprising instructions for executing steps of a control method according to one of claims 1 to 6, when said program is executed by a processor.

8. A recording medium readable by a processor on which a computer program is recorded, comprising instructions for executing steps of a control method according to any one of claims 1 to 6.

9. An electronic device able to implement a method according to any one of claims 1 to 6.

10. A smart card comprising the device according to claim 9.
